# EUROPÄISCHE PATENTANMELDUNG

(11) **EP 1 544 061 A2**
(43) Veröffentlichungstag der Anmeldung: **22.06.2005**
(21) Anmeldenummer: 04106602.8
(22) Anmeldetag: 15.12.2004
(51) Int. Cl.: B60R 21/26

(54) **Gasgenerator**

(30) Priorität: 15.12.2003 AT 8932003 U
(71) Anmelder: iSi Airbag GmbH, 1210 Wien (AT)
(72) Erfinder: Schäfer, Dietmar, 1130 Wien (AT)
(74) Vertreter: Kliment & Henhapel

(57) **Zusammenfassung**

Kaltgasgenerator zum Aufblasen eines Gassacks, insbesondere eines Airbags, mit Hilfe eines aus einem Gasdruckbehälter (7) ausströmenden Gases, wobei der Gasdruckbehälter (7) in axialer Richtung mit einem Außengehäuse (13) verbunden ist. Das Außengehäuse ist mit einem eine Zündpille (4) enthaltenden Zündgehäuse (14) verbunden. Der Gasdruckbehälter (7) ist mit einem zerstörbaren Dichtelement (2) verschlossen, wobei die Zerstörung des Dichtelements (2) durch einen auf das Dichtelement (2) gerichteten, fokussierten Heißgasstrahl erfolgt, der durch Zünden der Zündpille (4) erzeugt wird. Das Dichtelement (2) ist zur Gänze und freiliegend in das Innere des Außengehäuses (13) gerichtet. Erfindungsgemäß ist vorgesehen, dass das Zündgehäuse (14) in das Innere des Außengehäuses (13) ragt, ohne die gegenüberliegende Innenwand des Außengehäuses (13) zu berühren, und der Heißgasstrahl ausschließlich durch Zündung der durch Anlegen eines elektrischen Impulses aktivierbaren Zündpille (4) erzeugt wird.

## Beschreibung

Die vorliegende Erfindung bezieht sich auf einen Kaltgasgenerator zum Aufblasen eines Gassacks (Airbags) gemäß Oberbegriff des Anspruchs 1.

Solche Gasgeneratoren dienen dazu, im Funktionsfall mittels gespeichertem Gas einen damit verbundenen Gassack, beispielsweise einen Airbag in einem Auto, aufzublasen.

Ein bei der Befüllung von Airbags auftretendes Problem ist die hohe Temperaturentwicklung, die insbesondere bei pyrotechnisch generiertem Gas auftritt, was neben der Gefährdung der Insassen auch die thermische Zerstörung des Gassacks mit sich ziehen kann.

Von Hybridgasgeneratoren, die sowohl über eine pyrotechnische Treibladung als auch über eine Kaltgasquelle in Form eines Gasspeichers verfügen, ist bekannt, dass der Heißgasstrom einer pyrotechnischen Treibladung ein den Gasbehälter verschließendes Dichtelement durchbrennt. Diese Treibladung wird üblicherweise von einer Zündpille (ein mit einer Ummantelung versehener Anzünder, der in seinem Inneren eine geringe Menge einer pyrotechnischen Zündladung enthält, die über in die Zündpille geführte Zündpins, an die von außen eine elektrische Spannung angelegt wird, zündbar ist) gezündet, die mit einer Ladung von ca. 100 mg pyrotechnischem Material keinen signifikanten Einfluss auf die Leistung eines Gasgenerators besitzt. Ein solcher Hybridgasgenerator ist beispielsweise in der EP 699.231 A1 offenbart.

Es sind auch Kaltgasgeneratoren bekannt, die auf den Einsatz einer zusätzlichen Treibgasladung verzichten und ausschließlich eine Zündpille zur Zerstörung des Dichtelements verwenden. Dies hat den Vorteil, dass durch das Weglassen der zusätzlichen Treibgasladung die Temperatur des Gases im Gassack auf das thermodynamische Verhalten des eingesetzten Gases im Gasdruckbehälter reduziert wird, wodurch dieses damit "kalt" vorliegt. Weiters wird der Anfall von giftigen Reststoffen vermieden, die im Zusammenhang mit dem Abbrand von zusätzlichen pyrotechnischen Treibladungen entstehen. Ein solcher Kaltgasgenerator ist beispielsweise in der DE 100 38 676 A1 offenbart. Dort wird der durch die Zündpille generierte Heißgasstrom in einem kleinen, abgeschlossenen Raum direkt auf das Dichtelement, eine Membran, gelenkt, welche sich gegen ein Zündgehäuse abstützt. Durch die Zündung der Zündpille in einem abgeschlossenen Raum entsteht eine Druck- bzw. Schockwelle, die das Dichtelement zerstört. Um diesen kleinen, abgeschlossenen Raum, dessen eine Seite durch das Dichtelement begrenzt ist, zu fertigen und die Abstützung des Dichtelements zu ermöglichen, sind durch den Kontakt mit dem unter Druck stehenden Dichtelement hohe Anforderungen an die rohrförmige Abstützung gegeben, was eine unnötig aufwendige Fertigung mit sich bringt. Weiters bedingt der strömungsdynamisch komplexe ringförmige Abströmungsquerschnitt, der nach der Zerstörung des Dichtelements entstehen soll, eine Unsicherheit in Bezug auf die Reproduzierbarkeit des Öffnungsverhaltens. Ein weiterer Nachteil ist, dass die Befüllung und damit auch die Prüfung des Gasdruckbehälters erst nach dem kompletten Zusammenbau des Kaltgasgenerators erfolgen kann, da das Dichtelement ohne zusätzlich Abstützung dem Innendruck des Gasdruckbehälters nicht standhalten würde.

Bei freiliegenden und zur Gänze in den Innenraum des Außengehäuses gerichteten Dichtelementen sind bei der Fertigung des Kaltgasgenerators keine anderen Komponenten an der belasteten Membran im Eingriff, was die Produktsicherheit erhöht. Die Membran ist auch ohne Abstützung dicht und nicht der Gefahr der Beschädigung und damit Zerstörung ausgesetzt, sodass bei der Fertigung des Kaltgasgenerators die Befüllung und Prüfung des Gasdruckbehälters nicht unbedingt als letztes erfolgen muss. Durch die zentrale Zerstörung der Membran aufgrund eines fokussierten Heißgasstrahles ergibt sich ein zuverlässig reproduzierbarer Abströmungsquerschnitt.

Bei Kaltgasgeneratoren dieser Art ist es des weiteren beispielsweise aus der DE 201 14 665 U1 bekannt, dass der Gasdruckbehälter in axialer Richtung mit einem Außengehäuse verbunden ist, das am axialen Ende eine axiale, zum Gassack führende Ausströmöffnung aufweist und mit einem die Zündpille enthaltenden Zündgehäuse verbunden ist, dessen Längsachse mit der Längsachse des Außengehäuses einen im wesentlichen rechten Winkel einschließt. Der von der Zündpille erzeugte Heißgasstrahl wird in der Regel über eine Düsenkammer des Zündgehäuses durch das Innere des Außengehäuses fokussiert auf das Dichtelement geleitet. Die Düsenkammer befindet sich dabei im Inneren des Außengehäuses und stützt sich an der gegenüberliegenden Innenwand des Außengehäuses ab.

Allerdings ist bei Kaltgasgeneratoren dieser Art aufgrund des querenden Zünd- und Treibsatzgehäuses der Strömungsquerschnitt für das aus dem Gasdruckbehälter strömenden Gases verringert und die Strömungsdynamik beeinträchtigt, was nicht nur die Aufblasgeschwindigkeit des Gassacks reduziert, sondern auch die Reproduzierbarkeit des Aufblasvorganges mitunter ungünstig beeinflusst.

Es ist daher Ziel der Erfindung, diese Nachteile zu vermeiden und insbesondere die Strömungsdynamik innerhalb des Außengehäuses zu verbessern. Erfindungsgemäß wird dieses Ziel durch die kennzeichnenden Merkmale des Anspruchs 1 erreicht.

Anspruch 1 sieht hierbei vor, dass das Zündgehäuse in das Innere des Außengehäuses ragt, ohne die gegenüberliegende Innenwand des Außengehäuses zu berühren, und der Heißgasstrahl ausschließlich durch Zündung der durch Anlegen eines elektrischen Impulses aktivierbaren Zündpille erzeugt wird. Dadurch wird der Strömungsquerschnitt innerhalb des Außengehäuses im Bereich des eindringenden Zündgehäuses vergrößert und die Strömungsdynamik während des Ausströmens des Gases aus dem Gasdruckbehälter optimiert, was für ein rasches Aufblasen des Gassacks entscheidend ist.

Durch die Kombination der erfindungsgemäßen Merkmale wird erreicht, dass zusätzliche Treibladungen (Booster Ladungen) vermieden werden können, ohne eine zuverlässige Zerstörung des Dichtelements oder ein optimales Ausströmen des Gases aus dem Gasdruckbehälter zu beeinträchtigen, was lange Zeit als unmöglich galt. Hierzu ist es auch vorteilhaft, die Eigenschaften der Membran gemäß der Merkmale von Anspruch 3 zu wählen.

Der vorgeschlagene Kaltgasgenerator weist im Gegensatz dazu einen im Aufbau einfachen und äußerst zuverlässigen Öffnungsmechanismus auf und bietet gleichzeitig hohe Sicherheit für die Insassen, wobei er den Gassack schonend, ohne Gefahr der Zerstörung, aber dennoch rasch aufbläst. Er erlaubt des weiteren eine flexible Fertigung, indem die Befüllung und Prüfung des Gasdruckbehälters zu einem beliebigen Zeitpunkt ohne vorherigem Komplettzusammenbau des Kaltgasgenerators möglich ist.

Anspruch 2 vereinfacht die Montage des Zündgehäuses im Außengehäuse. Der definierte Abstand zwischen Ausströmöffnung und Austrittsöffnung der Düsenkammer gemäß Anspruch 4 bewirkt eine verlässliche Zerstörung der Membran.

Die kennzeichnenden Merkmale der Ansprüche 5-8 beschreiben bevorzugte Ausführungsformen eines erfindungsgemäßen Kaltgasgenerators, insbesondere der Befestigung des Zündgehäuses am Außengehäuse.

Im Anschluss erfolgt nun eine detaillierte Beschreibung der Erfindung. Dabei zeigt
- Fig.1: eine Schnittansicht im Schrägriss eines erfindungsgemäßen Öffnungsmechanismus für einen Kaltgasgenerator mit axialem Gasaustritt, und
- Fig.2: einen Querschnitt einer Ausführungsform eines erfindungsgemäßen Öffnungsmechanismus für einen Kaltgasgenerator mit axialem Gasaustritt gemäß Fig. 1.

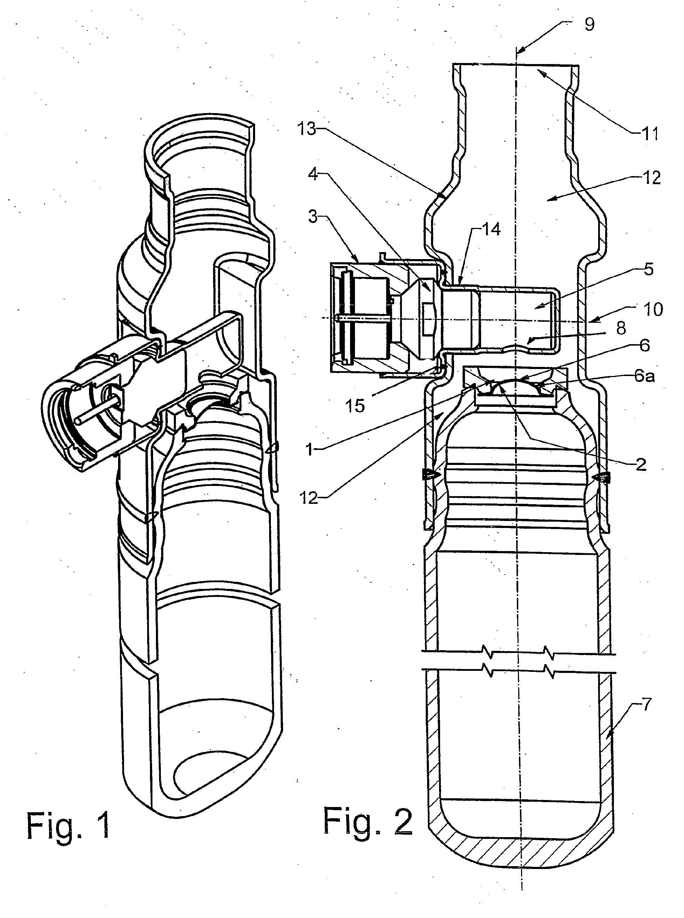

Fig.1 und 2 zeigen einen Kaltgasgenerator mit einem erfindungsgemäßen Öffnungsmechanismus, wobei eine Abströmung des freigesetzten Gases in axialer Richtung möglich ist. Im Bereich oberhalb der Ausströmöffnung 1 des Gasdruckbehälters 7 ist der Öffnungsmechanismus angeordnet, welcher zur Zerstörung des Dichtelements 2, in der Regel eine Membran 2, dient und im wesentlichen aus einer Zündpillenhalterung 3, einer Zündpille 4 und einer Düsenkammer 5 besteht, die in einem Zündgehäuse 14 untergebracht sind. Der Gasdruckbehälter 7 ist in axialer Richtung mit einem Außengehäuse 13 verbunden, das am axialen Ende eine axiale, zum Gassack führende Ausströmöffnung 11 aufweist.

Bei der Zündpille 4 handelt es sich um einen seit langem bekannten Anzünder, dessen wesentlicher Aufbau eine geringe Menge Zündladung in einem Gehäuse aufweist. In die Zündladung sind von außerhalb der Zündpille 4 elektrisch kontaktierbare Zündpins geführt, welche nach Anlegen einer Spannung die Zündladung zünden.

Die Zündpille 4 ist innerhalb des Zündgehäuses 14 gelagert, wobei die Längsachse 10 des Zündgehäuses 14 mit der Längsachse 9 des Außengehäuses 13 einen im wesentlichen rechten Winkel einschließt. Das Zündgehäuse 14 ist über eine in der Umfangswand des Außengehäuses 13 angeordnete, radiale Einstecköffnung 15 in das Außengehäuse 13 eingeführt und in ihm, etwa über ein Schraubverbindung, befestigt. Das Zündgehäuse 14 ragt dabei durch die radiale Einstecköffnung 15 im Außengehäuse 13 in das Innere 12 desselben, wobei insbesondere die Düsenkammer 5 des Zündgehäuses 14 im Inneren 12 des Außengehäuses 13 zu liegen kommt. Die Düsenkammer 5 ist mit einer Austrittsöffnung 8 versehen, die unmittelbar über der Membran 2 angeordnet ist. Vorzugsweise ist der Abstand zwischen dem obersten Punkt 6 der Membran 2 und der Austrittsöffnung 8 der Düsenkammer 5 kleiner oder gleich dem Durchmesser der Ausströmöffnung 1. Die dem Gasdruckbehälter 1, in Bezug auf dessen befüllten Zustand, abgewandte Oberfläche 6a ist zur Gänze und freiliegend in das Innere 12 des Außengehäuses 13 gerichtet.

Erfindungsgemäß ist vorgesehen, dass das Zündgehäuse 14 durch die radiale Einstecköffnung 15 im Außengehäuse 13 in das Innere 12 desselben ragt, ohne die gegenüberliegende Innenwand des Außengehäuses 13 zu berühren. Dadurch bleibt ein ausreichend großer Ausströmquerschnitt im Außengehäuse 13, welcher einen großen Volumenstrom an Gas ermöglicht. Das Zündgehäuse 14 kann dabei mit dem Außengehäuse 13 verschraubt oder verschweißt sein. Weiters sieht eine bevorzugte Ausführungsvariante vor, das Zündgehäuse 14 mit dem Außengehäuse 13 einstückig zu fertigen. Eine weitere alternative Ausführungsform sieht vor, das Zündgehäuse 14 mit Spreizelementen zu versehen, welche sich nach dem Einschieben des Zündgehäuses 14 in das Außengehäuse 13 verspreizen, um das Abziehen des Zündgehäuses 14 zu verhindern.

Soll der Gassack, insbesondere der Airbag, aufgeblasen werden, wird, wie erwähnt, zuerst die Zündpille 4 durch Anlegen eines elektrischen Zündimpulses gezündet. Die Energiefreisetzung wird in der Düsenkammer 5 gebündelt und als Heißgasstrahl konzentriert vorzugsweise auf den höchsten Punkt 6 der Membran 2 geleitet, welche die Ausströmöffnung 1 des Gasspeichers 7 verschließt. An diesem Punkt 6 tritt im Zuge der Druckbelastung der Membran 2 durch die Gasfüllung die höchste Spannung auf, wodurch sich dort ihre dünnste Stelle ergibt. Da der Werkstoff der Membran 2 bei Temperatureinwirkung stark an Festigkeit verliert, bewirkt die partielle Erhitzung durch den gebündelten Heißgasstrahl eine Schwächung und damit die Zerstörung der unter Last stehenden Membran 2 im Bereich des angeströmten Punktes 6. Die Dynamik des entweichenden, stark komprimierten Gas im Gasspeicher 7 bewirkt in Folge die vollständige Freilegung der Ausströmöffnung 1.

Eine Zerstörung des Dichtelements 2 durch eine Druck- bzw. Schockwelle, wozu ein kleiner, abgeschlossener Raum erforderlich ist, ist im vorliegenden Fall nicht gewünscht. Es ist vollkommen ausreichend, den Heißgasstrom über die Düsenkammer 5 gebündelt auf das Dichtelement 2 zu fokussieren. Das Dichtelement 2 kann dabei vollkommen frei liegen. Eine zusätzliche Abstützung ist nicht erforderlich. Die Zerstörung des Dichtelements 2 erfolgt durch thermische Schwächung. Der Innendruck des Gasdruckbehälters 7 zerstört dann das thermisch geschwächte Dichtelement 2.

Um die Auslösesicherheit zusätzlich zu erhöhen und damit die Versagenswahrscheinlichkeit zu minimieren, ist vorgesehen, dass der Abstand zwischen dem obersten Punkt der Membran 2 und der Austrittsöffnung 8 der Düsenkammer 5 kleiner oder gleich dem Durchmesser der Ausströmöffnung 1, also dem druckbelasteten Querschnitt der Membran 2, ist. Somit ist die vollständige Zerstörung der Membran 2 auch durch Einsatz einer herkömmlichen Zündpille 4, die lediglich einen geringen Heißgasstrom erzeugen kann, gewährleistet.

## Patentansprüche

1. Kaltgasgenerator zum Aufblasen eines Gassacks, insbesondere eines Airbags, mit Hilfe eines aus einem Gasdruckbehälter (7) ausströmenden Gases, wobei der Gasdruckbehälter (7) in axialer Richtung mit einem Außengehäuse (13) verbunden ist, das am axialen Ende eine axiale, zum Gassack führende Ausströmöffnung (11) aufweist und mit einem eine Zündpille (4) enthaltenden Zündgehäuse (14) verbunden ist, dessen Längsachse (10) mit der Längsachse (9) des Außengehäuses (13) einen im wesentlichen rechten Winkel einschließt, wobei der Gasdruckbehälter (7) mit einer Ausströmöffnung (1) versehen ist, welche mittels eines zerstörbaren Dichtelements (2) verschlossen ist, dessen im befüllten Zustand des Gasdruckbehälters (1) diesem abgewandte Oberfläche (6a) zur Gänze und freiliegend in das Innere des Außengehäuses (13) gerichtet ist, und die Zerstörung des Dichtelements (2) durch einen auf das Dichtelement (2) gerichteten Heißgasstrahl erfolgt, der durch Zünden der im Zündgehäuse (14) angeordneten Zündpille (4) erzeugt wird und über eine Düsenkammer (5) des Zündgehäuses (14) durch das Innere des Außengehäuses (13) fokussiert auf das Dichtelement (2) geleitet wird, **dadurch gekennzeichnet, dass** das Zündgehäuse (14) in das Innere des Außengehäuses (13) ragt, ohne die gegenüberliegende Innenwand des Außengehäuses (13) zu berühren, und der Heißgasstrahl ausschließlich durch Zündung der durch Anlegen eines elektrischen Impulses aktivierbaren Zündpille (4) erzeugt wird.

2. Kaltgasgenerator nach Anspruch 1, **dadurch gekennzeichnet, dass** das Zündgehäuse (14) über eine in der Umfangswand des Außengehäuses (13) angeordnete, radiale Einstecköffnung (15) in das Außengehäuse (13) eingeführt ist.

3. Kaltgasgenerator nach Anspruch 1 oder 2, **dadurch gekennzeichnet, dass** das Dichtelement (2) aus einer Membran mit einer Zugfestigkeit von mehr als 850 N/mm² gefertigt ist.

4. Kaltgasgenerator nach einem der Ansprüche 1 bis 4, **dadurch gekennzeichnet, dass** der Abstand zwischen dem obersten Punkt (6) der Membran (2) und der Austrittsöffnung (8) der Düsenkammer (5) kleiner oder gleich dem Durchmesser der Ausströmöffnung (1) ist.

5. Kaltgasgenerator nach einem der Ansprüche 1 bis 5, **dadurch gekennzeichnet, dass** das Zündgehäuse (14) mit dem Außengehäuse (13) verschraubt ist.

6. Kaltgasgenerator nach einem der Ansprüche 1 bis 5, **dadurch gekennzeichnet, dass** das Zündgehäuse (14) mit dem Außengehäuse (13) verschweißt ist.

7. Kaltgasgenerator nach einem der Ansprüche 1 bis 5, **dadurch gekennzeichnet, dass** das Zündgehäuse (14) mit dem Außengehäuse (13) einstückig ausgebildet ist.

8. Kaltgasgenerator nach einem der Ansprüche 1 bis 5, **dadurch gekennzeichnet, dass** das Zündgehäuse (14) mit Spreizabschnitten versehen ist, die im Inneren des Außengehäuses (13) aufgespreizt sind.
